# EUROPÄISCHE PATENTSCHRIFT

(11) **EP 0 696 980 B1**
(45) Veröffentlichungstag und Bekanntmachung des Hinweises auf die Patenterteilung: **07.01.1999**
(21) Anmeldenummer: 95910538.8
(22) Anmeldetag: 01.03.1995
(51) Int. Cl.: B63B 25/00

(54) **PALETTEN-REGALLAGER FÜR EIN/IN EINEM WASSERFAHRZEUG, VORZUGSWEISE KÜHLSCHIFF**
PALETTE SHELF STORAGE SYSTEM FOR/IN A WATERCRAFT, PREFERABLY A REFRIGERATION SHIP
DISPOSITIF DE STOCKAGE EN COMPARTIMENTS ETAGES AVEC PALETTES, POUR NAVIRE, DE PREFERENCE POUR NAVIRE FRIGORIFIQUE

(30) Priorität: 03.03.1994 DE 4407048
(43) Veröffentlichungstag der Anmeldung: 21.02.1996
(73) Patentinhaber: Westfalia-WST-Systemtechnik GmbH & Co. KG, 33829 Borgholzhausen (DE)
(72) Erfinder: UPMEYER, Ulrich, D-33829 Borgholzhausen (DE)
(74) Vertreter: Hanewinkel, Lorenz, Dipl.-Phys.
(86) Internationale Anmeldenummer: EP9500738
(87) Internationale Veröffentlichungsnummer: WO9523730

(56) Entgegenhaltungen:
- DE-A- 1 556 673
- DE-C- 2 507 535
- FR-A- 2 584 366
- GB-A- 1 381 565
- US-A- 3 880 299

## Beschreibung

Die Erfindung bezieht sich auf ein Regallager, vorzugsweise Paletten-Regallager, in dem in einem Kühlschiff luftzukühlende Güter (Waren) der verschiedensten Art, insbesondere Südfrüchte, gelagert und transportiert werden können.

Aufgabe der Erfindung ist es, ein Paletten-Regallager mit hoher Aufnahmekapazität an Paletten mit Gütern für ein/in einem Kühlschiff zu schaffen, welches eine optimale Luftführung und verlustarme Luftkühlung in seinen Regalzeilen ergibt, ein rationelles Be- und Entladen der Regalzeilen ermöglicht und die Paletten und Güter in den Regalzeilen lagefixiert und bei Schiffsbewegungen gegen Verlagerungen und Beschädigungen gesichert aufnimmt.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildung der vorgenannten Aufgabenlösung und der zusätzlichen Aufgabe, das Regallager unter weitestgehender Vermeidung von Kältebrücken in der Schiffsisolierung im Schiffsrumpf montieren zu können, gegen Schiffsbewegungen stabilisiert auszuführen und mit die Paletten mit Gütern schonend und lagefixiert bewegenden, in das und aus dem Kühlschiff zu transportierenden und die Regalzeilen be- und entladenden Mitteln in einfacher Weise und sicherer Funktion sowie rationeller Arbeitsweise als Bestand- und Zusatzteilen auszurüsten.

Das erfindungsgemäße Paletten-Regallager ist u.a. zum Einbau in Kühlschiffe konzipiert, welche für den Transport luftzukühlender Güter der verschiedensten Art, insbesondere Südfrüchten, vorgesehen sind.

Dieses Paletten-Regallager setzt sich aus einer Vielzahl an im Schiffsrumpf beiderseits einer Regalgasse angeordneter und mit dem Schiffsrumpf sowie mit Trennwänden (Schotten) verbundenen Regalzeilen zusammen, wobei die beiderseits der Regalgasse (links und rechts) stehenden Regalzeilen jeweils einen Regalblock bilden.

Diese Regalzeilen sind aus aufrechten Regalständern und Horizontalträgern sowie in Etagen angeordneten Trag- und Laufführungen gebildet, welche von der Regalgasse zur Schiffsrumpf-Seitenwand hin sich erstrecken und Kanalfahrzeug (Satellitenwagen) für den Transport der Paletten mit den Gütern in die Regalzeilen aufnehmen sowie die abgesetzten Paletten mit Gütern tragen.

Jeder Etage der Regalzeilen ist der Schiffsrumpf-Seitenwand benachbart ein Luftkanal zugeordnet und an der regalgassenseitigen Stirnwand eine Luftsperre vorgesehen, wobei durch den Luftkanal und die Trag- und Laufführungen, sowie die Luftsperre in jeder Etage eine Umwälzung der Luftkühlung erfolgt und somit die Kühlung der Güter in einem geschlossenen Bereich durchgeführt wird, was eine optimale und verlustarme Kühlung gewährleistet und platzsparend in der Höhe ist.

Die sich beiderseits der Regalgasse gegenüberstehenden Regalzeilen sind jeweils durch eine obenseitige Brücke verbunden, welche zur Stabilität der aus mehreren Regalzeilen bestehenden linken und rechten Regalblöcke dient. Diese Brücken sind unabhängig bzw. losgelöst vom Schiffsdeck auf den Regalständern befestigt, so daß sie keine Beeinflussung durch ein sich durchbiegendes und beladenes Schiffsdeck erfahren.

Der Verfahrgang für das in der Regalgasse laufende Regalfahrzeug ist im Schiffsrumpf abgesenkt, und dieses Regalfahrzeug läuft durch im Regalgang und unter den Brücken angebrachte formschlüssige Führungs- und Übertragungsmittel, wie Zahnstangen und Zahnräder, unempfindlich gegen Schiffsbewegungen (Kippkräfte), welche auf das Regalfahrzeug wirken, und unempfindlich gegenüber äußeren Einflüssen durch Feuchtigkeit o. dgl. Weiterhin kann durch diese Führungsübertragung das Regalfahrzeug sehr schnell in seine beiden Endlagen fahren.

Durch das Absenken des Verfahrganges für das Regalfahrzeug im Schiffsrumpf wird die Mindestbauhöhe des Regalfahrzeuges reduziert und gleichzeitig ein günstigerer Schwerpunkt für das auf dem Schiffsdeck mit Ware beladenen Schiffes erreicht, so daß dieses nicht wesentlich höher bauen muß.

Die Trag- und Laufführungen in Form von Laufrinnen übertragen einerseits Querkräfte aus dem Regal in den Schiffsrumpf, dienen andererseits zum Tragen der Luftkanäle, bilden einen Laufsteg zur Störbeseitigung/Wartung und bilden die Tragkonstruktion für das Ladegut.

Zusätzlich ergeben diese Trag- und Laufführungen die Aufnahme und Führung für den Satellitenwagen und in Verbindung mit dem Luftkanal die Luftführung von Zu- und Abluft, welche weitgehend getrennt voneinander sind. Die Zuluft wird vom Luftkanal in die Laufrinnen eingeblasen und strömt dann durch die Paletten und die daraufstehende Ware und wird dann als Abluft zum Schiffsrumpf abgesaugt.

Das Paletten-Regallager wird seitlich am Schiffsrumpf und an Trennwänden (Schotten) befestigt, um Horizontalkräfte aus dem Regal auf den Schiffsrumpf zu übertragen.

Die Horizontalkräfte aus dem Regal werden von den umlaufenden Horizontalträgern durch wenige Abstützungen in den Schiffsrumpf eingeleitet, so daß die Isolierung des Schiffsrumpfes an möglichst wenigen Punkten unter Vermeidung von Kältebrücken durchbrochen wird.

Die einzelnen Regalstützen sind auf Lastträgern befestigt, welche an wenigen Punkten auf dem Schiffsrumpf festgelegt sind und dadurch die Schiffsrumpfisolierung auch nur an wenigen Punkten zu Vermeidung der Kältebrücken unterbrechen.

Die regalgassenseitige Be- und Entlade-Stirnseite der Regalzeilen und die Oberseite derselben wird durch die Luftsperre verschlossen und geöffnet, welche aus einem umlaufenden Förderer mit daran befestigter Plane gebildet ist, die durch den Förderer von unten nach oben zu öffnen ist und somit den Be- und Entladevorgang für die einzelnen Etagen der Regalzeilen ermöglicht.

Der motorisch angetriebene Förderer wird mit seinen endlos umlaufenden Ketten, Riemen oder Seilen in den aufrechten Vertikalstützen und den oberen Regalträgern über Umlenkorgane geführt und nimmt an querverlaufenden Stäben die Plane mittels Schlaufenverbindung auf, wobei die Plane an der der Regalzeilen-Innenseite zugewandten Seite in sich eben ist, so daß keine Störungen auf das Gut entstehen.

Die Querstäbe für die Halterung der Plane an den Ketten sind in bevorzugter Weise durch federbelastete Rastzapfen in den Kettengliedern lösbar festgelegt, so daß für Wartungsarbeiten am Motor, zum Auswechseln evtl. verbogener Querstäbe und zur Inspektion der gesamten Luftsperre, diese Querstäbe einfach aus dem Förderer herauszunehmen sind und dadurch ein guter Zugang zu der gesamten Luftsperre und der Antriebs- und Umlenkstation gegeben ist.

Die Luftkanäle bilden eine Prallwand für die einzulagernden Paletten mit Gütern, so daß sie in Tiefenrichtung der Regalzeilen in der Bewegung abgebremst werden. Die Luftsperre ergibt mit ihrer Plane ebenfalls eine Prallwand gegen herabfallendes oder verschobenes Ladegut und dient gleichzeitig zur Luftführung innerhalb der einzelnen Aufnahnekanäle der Regalzeilen.

Der Luftkanal sowie die Plane sichern weiterhin das Ladegut bei der Schiffahrt durch die entstehenden Bewegungen gegen Beladeverlagerung.

An den Vertikal-Regalstützen jeder Regalzeile sind innenseitig sich über die gesamte Zeilenhöhe und -tiefe erstreckende Sickenbleche befestigt, deren Sicken in horizontaler Richtung verlaufen und welche einerseits die Luftführung begrenzen und andererseits als Prall- bzw. Führungswände für die Paletten mit Lagergut dienen. Durch diese Sickenbleche kann bei den Schiffsbewegungen das Ladegut nicht herunterfallen oder verkanten, sondern wird in der jeweiligen Etage der Regalzeile sicher geführt.

Die Befestigung dieser Sickenbleche erfolgt durch Befestigungsmittel, welche in den Sickentälern liegen, wodurch die vorstehenden und die Führungs- bzw. Prallfläche bildenden Sicken nicht beeinträchtigt werden, so daß dem Ladegut eine glatte, reibwertmindernde Führung gegeben ist.

Weiterhin ergeben die horizontalen Sicken den Sickenblechen eine erhöhte Stabilität; die Sickenbleche sind in einem Stück gefertigt, so daß keine Stoßkanten für das Ladegut und die Paletten bei der Einbringung oder Entnahme durch den Satellitenwagen entsteht und dadurch das Lagegut sicher auf den Paletten verbleibt.

Das Kühlschiff ist mit einer Be- und Entladeschleuse im Bereich des Schiffsdeckes ausgerüstet, durch das die Paletten mit Güter in das Schiff und zum Regal gebracht werden.

Hierfür ist im Schiffsdeck lediglich ein rechteckiger Durchlaß erforderlich, der durch eine einfache Klappe verschlossen wird. Zur Förderung des Ladegutes ist an einer Vertikalführung ein Schlitten mit einem Kragarm angebracht, der ohne zusätzliche Abdichtungen im Durchlaß- und Klappenbereich durch den Durchlaß fahren kann und somit einen kostengünstigen und isoliertechnisch einfachen Be- und Entladevorgang ermöglicht.

Weiterhin sind dem Schiff ein Transportkorb und ein Stetigförderer, vorzugsweise eine Rollenbahn, zugeordnet, welche ebenfalls in lagefixierter und touchierfreier Weise ein Beladen und Entladen des Transportkorbes und ein Absetzen des Transportkorbes auf der Rollenbahn für das Verteilen der Paletten mit Gütern ermöglicht.

Der Fahrkorb ist nach allen Seiten offen, so daß er durch geeignete Geräte, vorzugsweise Gabelstapler, beschickt werden kann. Positionierhilfen trennen die Ladeeinheiten berührungslos in späterer Laufrichtung der Ladeeinheit, so daß ein Touchieren der Ladeeinheit vermieden wird und geben Freiheit für das Lastaufnahmemittel des Staplers beim Ein- und Ausfahren.

Das gesamte Regallager mit seinen zusätzlichen Hilfsmitteln und Transportorganen sowie Lagefixierungsorganen ist einfach und kostengünstig aufgebaut, leicht und stabil im Schiff zu montieren, nimmt die zu transportierenden Güter sicher und lagefixiert auf und ermöglicht ein störungsfreies Ein- und Auslagern dieser Güter in rationeller und schonender Weise.

Das Paletten-Regallager bildet in sich mit seinen Trag- und Laufführungen, den Luftkanälen und der Luftsperre einen eigenständigen Erfindungsgegenstand in Verbindung mit seiner Montageart im Schiff und stellt zusätzlich einen weiteren Erfindungsgedanken in Kombination mit dem Satellitenwagen, Regalfahrzeug, Be- und Entladeschleuse und Transportkorb mit Rollenbahn dar.

Auf den Zeichnungen ist ein Ausführungsbeipiel der Erfindung dargestellt, welches nachfolgend näher erläutert wird. Es zeigt:
- Fig. 1: eine Stirnansicht eines Teilbereiches eines in einem Kühlschiff eingebauten Paletten-Regallagers mit beiderseits einer Regalgasse für ein Regalfahrzeug angeordneten Regalzeilen mit etagenweise angeordneten Trag- und Laufführungen, diesen zugeordneten Luftkanälen und eine regalgassenseitigen Luftsperre,
- Fig. 2: eine Vorderansicht desselben Paletten-Regallagers von der Regalgasse hergesehen,
- Fig. 3: eine Vorderansicht der von einer Laufrinne gebildeten Trag- und Laufführung für einen Satellitenwagen für das Verfahren der Paletten und zum Abstellen der Paletten auf der Laufrinne, auf der linken Zeichnungshälfte in der Paletten-Transportstellung und auf der rechten Zeichnungshälfte im abgestellten Palettenzustand,
- Fig. 4: eine Seitenansicht, eine Vorderansicht und eine Draufsicht von Tragsteg-Zahnkanten der Laufrinne gemäß Ausschnitt X in Fig. 5,
- Fig. 5: eine Vorderansicht zweier übereinander zwischen vertikalen Regalständern angeordneter Laufrinnen mit abgestellten Paletten und an den Regalständern befestigten Sickenblechen,
- Fig. 6: einen Ausschnitt Y des Sickenbleches gemäß Fig. 5,
- Fig. 7: eine Draufsicht auf zwei Sickenbleche mit Einlaufkufen,
- Fig. 8: eine Draufsicht auf eine Kette eines Umlaufförderers der Luftsperre mit an der Kette festgelegtem Querstab mit Plane in Pfeilrichtung C gemäß Fig. 2 gesehen,
- Fig. 9: eine Draufsicht im teilweisen Schnitt eines Längenendes des Querstabes mit Rastzapfen,
- Fig. 10: eine Seitenansicht eines Teiles der Luftsperren-Plane mit Schlaufenbefestigung am Querstab,

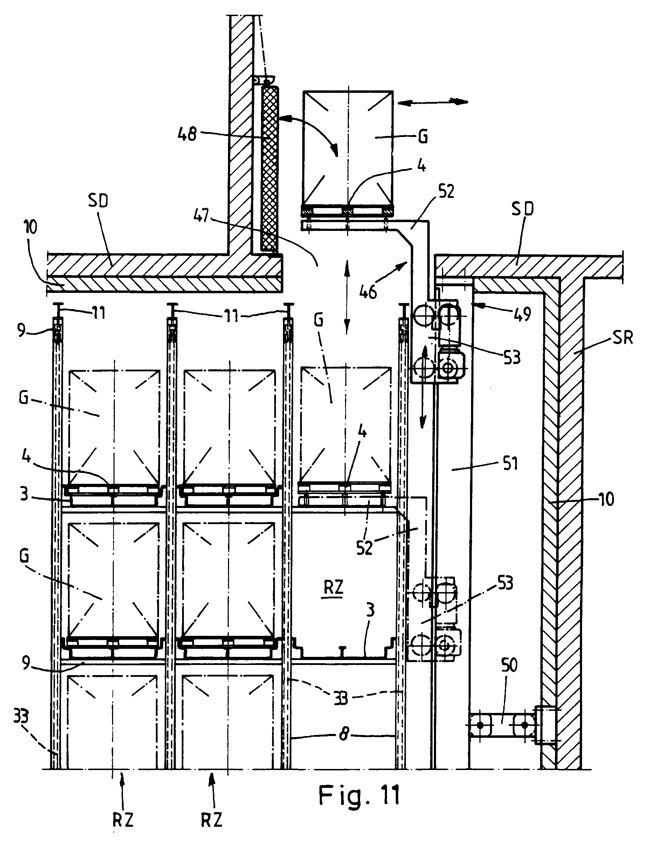

- Fig. 11: eine Vorderansicht eines Teiles des Regallagers mit Be- und Entladeschleuse im Schiffsdeck und Vertikalschlitten mit Kragarm,
- Fig. 12: eine Seitenansicht eines Transportkorbes und einer Rollenbahn,
- Fig. 13: eine Draufsicht auf den Transportkorb und die Rollenbahn.

Das Paletten-Regallager für ein/in einem Kühlschiff, zum Transport von luftzukühlenden Gütern (Waren) der verschiedensten Art, insbesondere Südfrüchten, Fleich o. dgl., weist eine Vielzahl an beiderseits einer Regalgasse (1) mit darin verfahrbarem Regalfahrzeug (2) angeordneten Regalzeilen (RZ) mit in Etagen angeordneten, rinnenförmigen Trag- und Laufführungen (3) für auf dieser abzustellende Paletten (4) und in diesen verfahrbaren Satellitenwagen (5) auf.

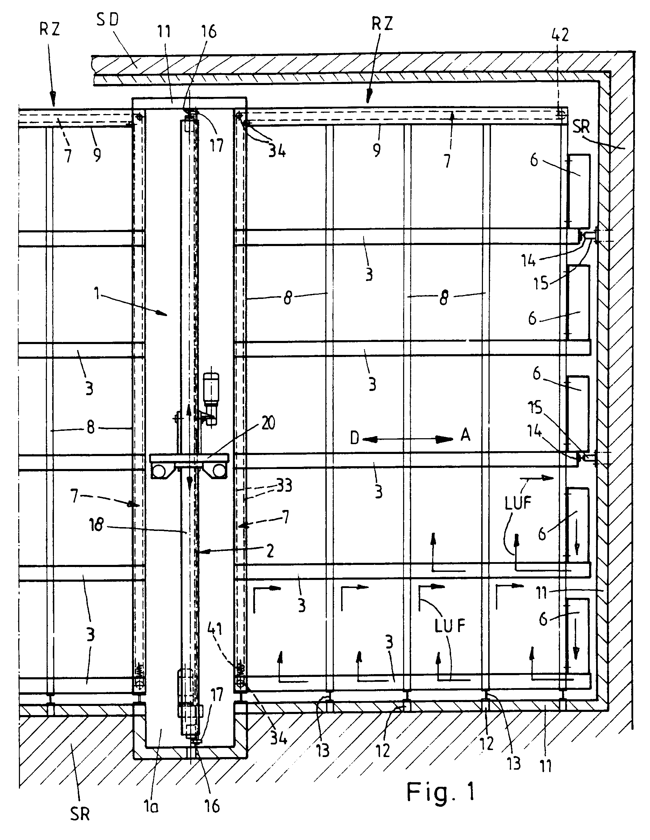

Den Trag- und Laufführungen (3) sind an ihrer der Regalgasse (1) abgewandten Längenende Luftkanälen (6) zugeordnet, welche mit den Trag- und Laufführungen (3) und den abgestellten Paletten (4) eine Luft-Umwälzführung (LUF) bilden (Fig. 1).

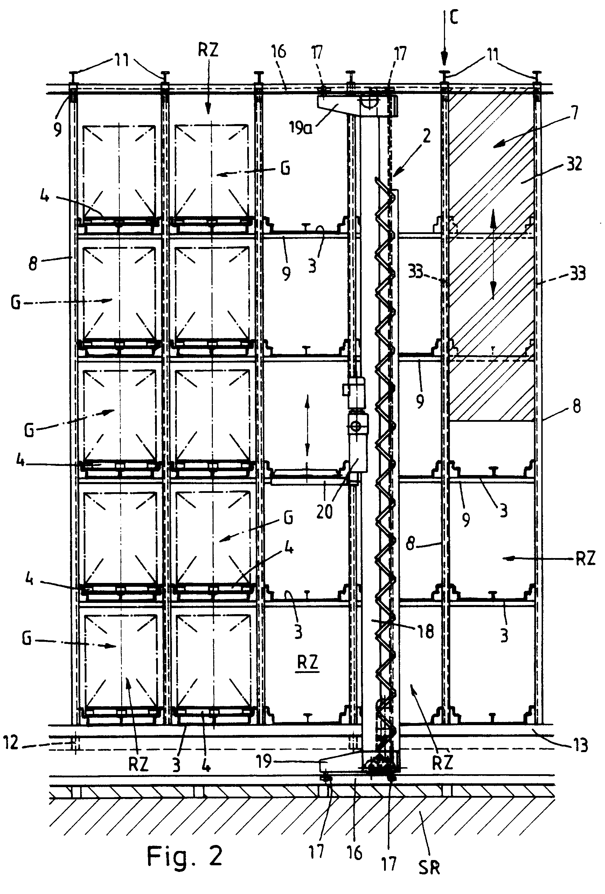

Jeder Regalzeile (RZ) ist an ihrer der Regalgasse (1) zugewandten Be- und Entlade-Stirnseite eine die Regalzeile (RZ) auf ihrer gesamten Höhe und Oberseite verschließende und zum Be- und Entladen zu öffnende Luftsperre (7) zugeordnet (Fig. 1 und 2).

Das Regallager besitzt eine Vielzahl an vertikalen Regalstützen (8) und damit verbundenen, die Trag- und Laufführungen (3) tragenden Horizontalträger (9); die Regalstützen (8) sind auf horizontalen, über in einer Isolierung (10) des Schiffrumpfes (SR) angeordnete Befestigungsböcke (12) mit dem Schiffsrumpf (SR) verbundene Lastträger (13) befestigt (Fig. 1).

Einzelne Horizontalträger (9) werden mit ihrem luftkanalseitigen Längenende mit horizontalen Seitenträgern (14) über an einer Isolierung (10) des Schiffsrumpfes (SR) angeordnete Stützböcke (15) gegenüber dem Schiffsrumpf (SR) horizontal abgestützt (Fig. 1).

Jeweils die beiden sich beiderseits der Regalgasse (1) gegenüberstehende Regalzeilen (RZ) sind durch eine die Regalgasse (1) überspannende und verbindungslos unter dem Schiffsdeck (SD) liegende Brücke ()11 miteinander verbunden und gegeneinander stabilisiert, wodurch die Regalblöcke rechts und links der Regalgasse ausgesteift werden.

Das Regalfahrzeug (2) läuft untenseitig in einem gegenüber der Standebene der Regalzeilen (RZ) im Schiffsrumpf (SR) abgesenkten Gang (1a) der Regalgasse (1) und wird im Gang (1a) und obenendig unter den Brücken (11) mittels formschlüssiger Führungsmittel (16, 17) verfahren.

Als formschlüssige Führungsmittel (16, 17) sind in bevorzugter Weise Zahnstangen (16) und Zahnräder (17) vorgesehen, wobei unter den Brücken (11) und im Gang (1a) je eine Zahnstange (16) festgelegt ist, mit denen das Regalfahrzeug (2) mit oben- und untenseitigen Zahnrädern (17) zusammenwirkt (Fig. 1 und 2). Anstelle von Zahnstagen (16, 17) können auch Ketten, Spindeln o. dgl. zur formschlüssigen Führung und Bewegungsübertragung eingesetzt werden.

Die Luftkanäle (6) sind der Schiffsrumpf-Isolierung (10) benachbart und werden von den in Beladerichtung (A) hinteren Enden der Trag- und Laufführungen (3) getragen und sind an den Regalstützen (8) befestigt, wie aus Fig. 1 ersichtlich; die Entladerichtung zum Regalgang (1) ist mit D bezeichnet.

Das Regalfahrzeug (2) hat in bekannter Weise einen Rahmenmast (18), der sich untenendig auf einem Fahrwerk (19) mit Fahrabtrieb abstützt; am Fahrwerk (19) sind die Zahnräder (17) gelagert, die mit der Zahnstange (16) als Laufschiene für das Fahrwerk (19) kämmen. Oben am Rahmenmast (18) lagern die mit der unter den Brücken (11) festgelegten Zahnstange (16) kämmenden Zahnrädern (17) an einem Laufwerk (19a).

Die Zahnstange (16) im Regalgang (1a) ist ebenfalls, wie die Ständer (8), gegenüer dem Schiffsrumpf (SR) an wenigen Punkten (12) abgestützt.

Am Rahmenmast (18) ist eine Traverse (20) mit Hubabtrieb höhenverfahrbar geführt, welche die Satellitenwagen (5) zum Be- und Entladen der Paletten (4) mit Gütern (G) zu den einzelnen Etagen der Regalzeilen (RZ) bewegt.

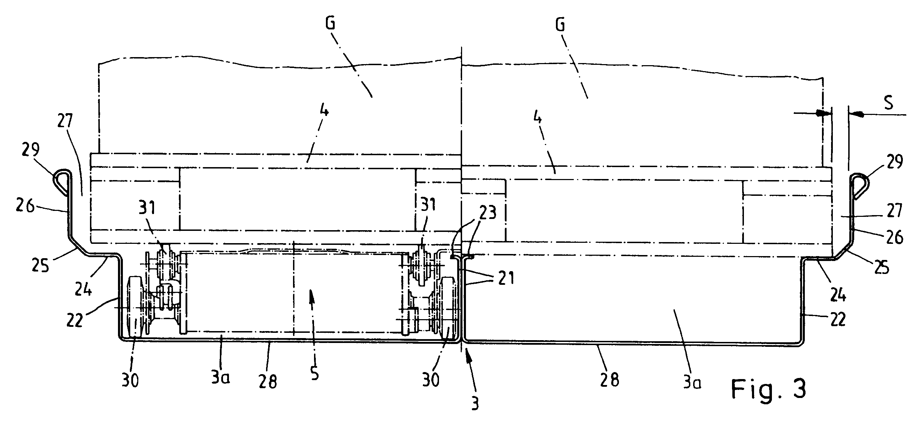

Die Trag- und Laufführung (3) für die auf dieser abzustellerden Paletten (4) und dem in diesem verfahrbaren Satellitenwagen (5) für die Paletten (1) ist, wie in Fig. 3 deutlich gezeigt, von einer Laufrinne (3) -Laufwanne- gebildet, die mindestens zwei seitliche, aufrechte Führungsschenkel (21, 22) für den Satellitenwagen (5) mindestens zwei seitliche, waagerechte Tragstege (23, 24) für die Paletten (4) , zwei sich an die Tragstege (24) nach oben und außen gerichtet anschließende Zentrierleisten (25) und zwei sich an die Zentrierleisten (25) anschließende, nach oben gerichtete mit Abstand (S) zur Palette (4) verlaufende Schutzrädern (26) aufweist.

Die Laufrinne (3) selbst, ein freier Raum (27) zwischen den Schutzrändern (26) und der Palette (4) und die Palette (4) selbst bilden Luftführungen und der freie Raum (27) zwischen den Schutzrändern (26) und der Palette (4) ergibt eine Aufnahme für Zurrmittel, vorzugsweise luftgefüllte Ladesicherungsschläuche, für die Palette (4) mit aufgenommenem Gut (G).

Die Laufrinne (3) ist aus zwei im Querschnitt identischen, spiegelbildlich angeordneten Kanälen (3a) mit U-förmigem Querschnitt zusammengesetzt. Jeder Kanal (3a) hat zwei aufrechte, sich von einem ebenen Kanalboden (28) abhebende Führungsschenkel (21, 22), zwei waagerechte Tragstege (23, 24) eine Zentrierleiste (25) und einen Schutzrand (26).

Jeder Kanal (3a) weist einen ersten aufrechten, vom Kanalboden (28) abgewinkelten Führungsschenkel (21) mit obenendig zu Kanalmitte hin abgewinkelten, waagerechten ersten Tragsteg (23) auf und die beiden Kanäle (3a) sind durch diese beiden ersten aneinanderliegenden Führungsschenkel (21) durch Schweißen o. dgl. zu der Laufrinne (3) verbunden.

Jeder Kanal (3a) besitzt einen zweiten aufrechten, vom Kanalboden (28) abgewinkelten Führungsschenkel (22) als äußeren Rinnenschenkel und am oberen Ende dieses zweiten Führungsschenkels (22) ist ein zweiter Tragsteg (24) nach außen abgewinkelt.

An den zweiten Tragsteg (24) schließt sich die schräg nach oben und außen abgewinkelte Zentrierleiste (25) an, welche auch bogenförmig ausgeführt sein kann.

An diese Zentrierleiste (25) ist der aufrechte Schutzrand (26) mit obenendig angeformtem, nach außen gerichteten Kantenprofil angeformt.

Die Zentrierleiste (25) steht unter einem Winkel von 45° zum zweiten Tragsteg (24) und der zentrierleistenseitige zweite Tragsteg (24) hat eine größere Breite als der erste kanalverbindungsseitige Tragsteg (21).

Jeder Kanal (3a) ist einstückig aus Metallblech geformt.

Der Satellitenwagen (5) ist als satellitenartiges Flurförderzeug mit angetriebenen Laufrollen (30) und das Gut (G) von den Tragstegen (23, 24) abhebenden, tragenden und verschiebenden, angetriebenen Trag- und Verschieberollen (31), Ketten, o. dgl. gebildet.

Die Laufrinne (3) ist insbesondere zum Transport von Paletten (4) mit zu belüftenden Gütern (G), z.B. Südfrüchten (Bananen, Kiwi) auf Schiffen, vorgesehen.

Bei Bewegungen während des Transportes (Schwanken des Schiffes) verhindern die Zentrierleisten (25) ein Verrutschen der Palette (4), so daß diese standsicher auf den Tragstegen (23, 24) gehalten wird.

Der Aufnahmeraum (27) zwischen Palette (4) und Schutzrand (26) ermöglicht ein Einbringen von Zurrmitteln, insbesondere luftgefüllter Ladesicherungsschläuche, zur Verzurrung der Palette (4) mit Gut (G) auf der Laufrinne (3).

Die U-förmigen Kanäle (3a) dienen einerseits zum Einfahren des Satellitenwagens (5) und andererseits zur Durchführung von Zuluft; ebenfalls ermöglichen die Paletten (4) selbst und der freie Raum (27) eine Luftführung, wodurch die Güter (G) optimal belüftet werden.

In den beiden Kanälen (3a) fahren vorzugsweise zwei gekoppelte Satellitenwagen (5) für den Palettentransport.

Die Fig. 3 zeigt links die von den Satellitenwagen (5) mit Abstand oberhalb der Tragstege (23, 24) getragene und verfahrbare Palette (4) und rechts die auf die Tragstege (23, 24) abgesetzte Palette (4).

Die Laufrinne (3) kann einstückig nur mit zwei Abstützstellen, und zwar den Tragstegen (24) ausgeführt sein, oder aber wie Fig. 3 zeigt, mit drei Paletten-Abstützstellen, und zwar den mittleren Tragstegen (23) und den beiden äußeren Tragstegen (24).

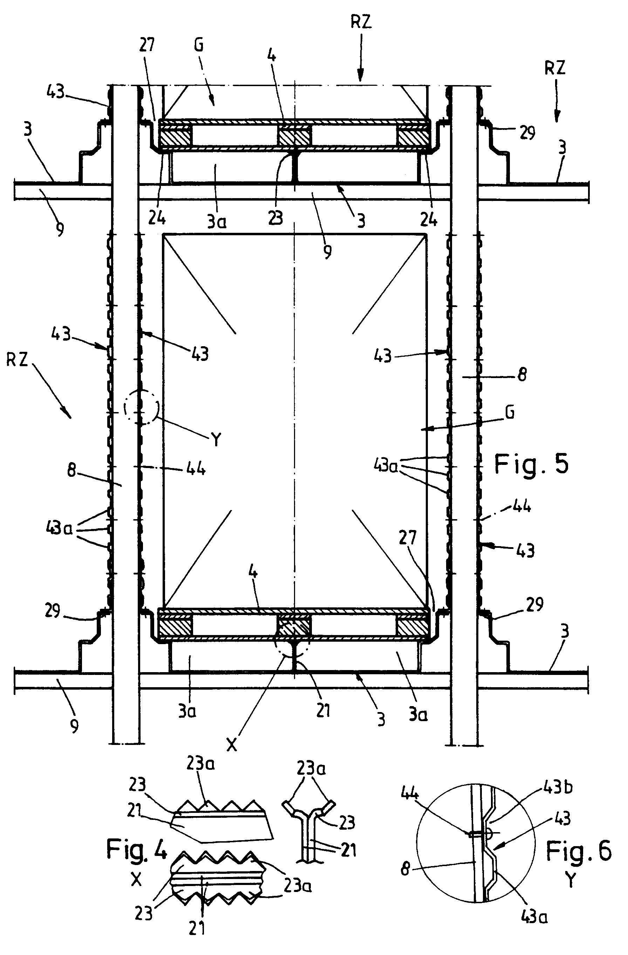

Die beiden Tragstege (23) für die mittige Abstützung der Palette (4) sind in bevorzugter Weise zu nach oben und außen gerichteten Zahnkanten (23a) ausgebildet, wie in Fig. 4 dargestellt, wodurch eine zusätzliche Verankerung in den Holzteilen der Palette (4) erfolgt. Diese Zahnkanten (23a) können auch aus den äußeren Tragstegen (24) ausgeformt sein.

Die Luftsperre (7) gemäß Fig. 1, 2, 8 bis 10, setzt sich aus einer flexiblen Plane (32) und einem motorisch angetriebenen, endlos umlaufenden, die Plane (32) in Höhenrichtung und auf der Oberseite der Regalzeile (RZ) für das Öffnen und Schließen der Regalzeile (RZ) von unten nach oben und umgekehrt bewegenden Förderer (33) zusammen.

Der Förderer (33) hat in den beiden vertikalen Regalstützen (8) und den oberen horizontalen Trägern (9) jeder Regalzeile (RZ) über Umlenkorgane (34) endlos umlaufende Ketten, Riemen oder Seile mit dazwischen lösbar festgelegten Querstäben (38) oder Querrohren, an denen mittels Schlaufen (39) die zu den eingelagerten Paletten (4) mit Gütern (G)) in sich ebene (glatte) Plane (32) lagefixiert festgelegt ist. Die Querstäbe (38) liegen immer zur Regalgasse (1) hin, so daß die Plane (32) zum Regalzeilen-Innenraum in sich eben ist.

Die Querstäbe (38) sind in bevorzugter Weise mit beidendseitigen, federbelasteten Rastzapfen (40) lösbar in Haltelaschen (39) oder Kettenglieder der Ketten (33a), Riemen oder Seile festgelegt, wodurch ein einfaches Auswechseln der Querstäbe (38), Abnehmen oder teilweises Lösen der Plane (32) für Warungsarbeiten möglich ist.

Im unteren und oberen Endbereich der vertikalen Regalständer (8) sind Umlenkräder oder -rollen (34) drehbar gelagert und dabei stehen die unteren Umlenkräder oder
-rollen (34) unter Federspannung -Druck oder Zugfeder (41)-; in dem dem Schiffsrumpf (SR) benachbarten Längenende der oberen Träger (9) ist zwischen den Planenbahnen (32) ein Antriebsmotor (42) angeordnet, der ebenfallsdurch Lösen einzelner Querstäbe (38) und Abheben der Plane (32) zu Wartungsarbeiten zugänglich ist.

Die Plane (32) besteht aus einer Textilbahn, kunststoffbeschichteten Tuchbahn, einer Kunststoffolie o. dgl. und hat eine Länge, die mindestens der Höhe der Regalzeile (RZ) entspricht. Die Plane (32) ist mit ihren Schlaufen (39) fest auf die Querstäbe (38) aufgeschoben, wodurch sie gegen seitliches Auswandern an den Querstäben (38) gesichert gehalten wird.

Wie Fig. 5, 6 und 7 zeigen, sind an den Innenseiten der die Regalzeilenbreite begrenzenden Regalstützen (8) über die gesamte Regalzeilenhöhe und -tiefe verlaufenden Sickenbleche (43) als Prall- und Luftsperrwände angeordneten sind, deren Sicken (43a) in horizontaler Tiefenrichtung der Regalzeile (RZ) verlaufen, in deren Sickentälern (43b) Befestigungsmittel (44) zum Halten der Sickenbleche (43) an den Regalstützen (8) zurückversetzt liegen und deren erhöhte Sicken (43a) Führungen für die ein- und auszuladenden Paletten (4) mit Gütern (G) bilden.

Die Sickenbleche (43) für beide Regalzeilenseiten sind jeweils einstückig ausgebildet und untenendig mit dem Kantenprofil (29) oder einem vom Schutzrand (26) nach außen abgewinkelten Kantensteg (29) verbunden (Fig. 5).

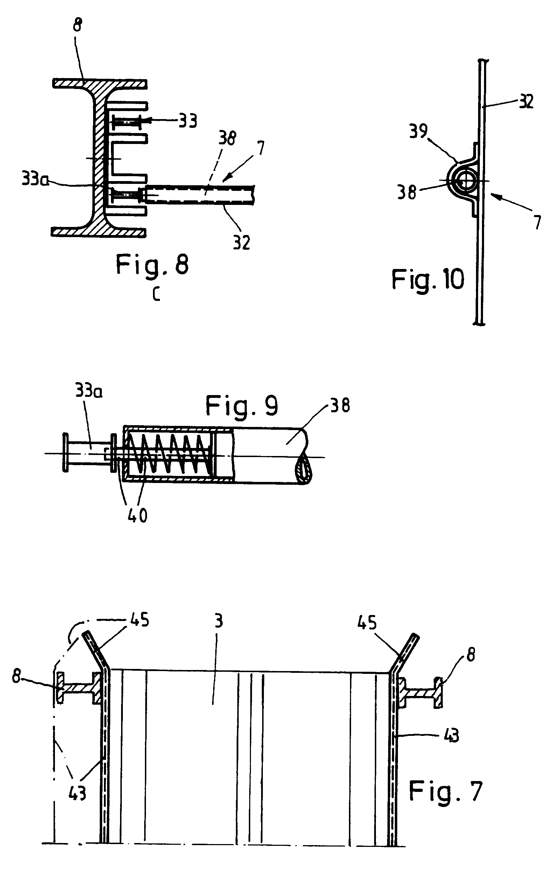

Die Sickenbleche (43) jeder Regalzeile (RZ) zeigen an ihrem regalgassenseitigen Ende je eine abgeschrägte und/oder bogenförmige Einlaufkufe (45) für die Paletten (4) mit Gütern (G) (Fig. 7).

In Fig. 1 ist eine Be- und Entladeschleuse (46) dargestellt, welche eine im Schiffsdeck (SD) aufschwenkbar gelagerte, einen Durchlaß (47) im Schiffsdeck (SD) abgedichtet verschließende Klappe (48) mit eckiger, vorzugsweise rechteckiger Grundform und eine Hubvorrichtung (49) zum Ein- und Ausbringen der Paletten (4) mit Gütern (G) in das /aus dem Regallager aufweist.

Die Hubvorrichtung (49) hat eine unter dem Schiffsdeck (SD) festgelegte und mit dem Schiffsrumpf (SR) über ein Loslager (50) beweglich verbundene Höhenführung (51) und weist einen an der Höhenführung (51) motorisch verfahrbaren, einen durch den Durchlaß (47) im Schiffsdeck (SD) höhenverfahrbaren Kragarm (52) tragenden Vertikalschlitten (53) auf.

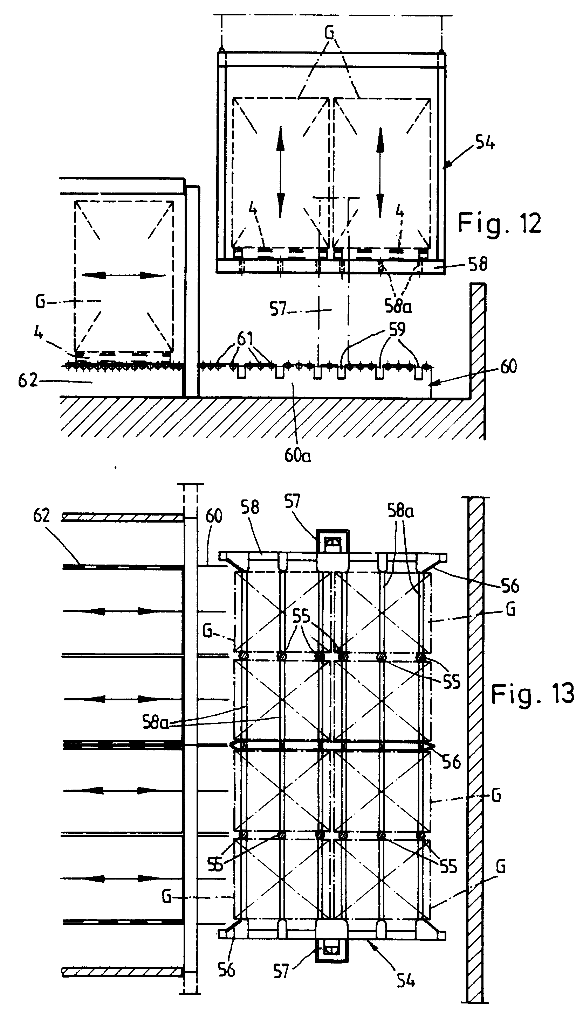

Fig. 12 und 13 zeigen einen von allen vier Seiten mit Paletten (4) be- und entladbaren Transportkorb (54) mit rechteckiger Grundform und Zentriervorsprüngen (55) und Einlaufkufen (56) für die Paletten (4) und eine den Transportkorb (54) zwischen aufrechten Führungen (57) und mit seinem untenseitigen Rahmen (58) in Einsetzmulden (59) aufnehmende Rollenbahn (60), deren Rollen (60a) die Paletten (4) vom Rahmen (58) hochheben und aus dem Transportkorb (54) ausfördern und einem angeschlossenen Förderer (62) übegeben.

Der Transportkob (54) läßt sich durch Gabelstapler o. dgl. von allen Seiten mit mehreren Paletten (4) mit Gütern (G) beschicken, wobei die Paletten (4) genau zentriert durch die Zentriervorsprünge (55) und Einlaufkufen (56) auf dem Rahmen (58) des Transportkorbes (54) abgestellt werden. Durch diese Zentriervorsprünge (55) und Einlaufkufen (56) wird ein Touchieren der Paletten (4) und Güter (G) beim Ausfördergang durch die Rollenbahn (60) vermieden.

Der Transportkorb (54) wird durch einer Kran bewegt und vertikal auf die Rollenbahn (60) zwischen deren Vertikalführungen (55) geführt abgesenkt, wobei die Tragbalken (58a) des Korbrahmens (58) in die nut- oder schlitzförmigen Einsetzmulden (59) eintauchen und der Rahmen (58) sich auf dem Rollenbahngestell (60a) abstützt und dabei die Rollen (61) die Palette (4) zum Ausfördern vom Korbrahmen (58) leicht angehoben haben.

Dieser Transportkorb (54) und die Rollenbahn (60) dienen zum Eingringen bzw. Ausbringen der Güter (G) mit Paletten (4) in bzw. aus dem Kühlschiff und dabei ist die Rollenbahn (60) im Kühlschiff angeordnet. Sie kann jedoch auch am Pier des Hafens installiert werden.

## Patentansprüche

1. Regallager für ein/in einem Kühlschiff, mit einem in einer Regalgasse (1) verfahrbaren Regalfahrzeug (2) mit höhenverfahrbarer Hubtraverse (20) und einer Vielzahl beiderseits der Regalgasse (1) angeordneten Regalzeilen (RZ), welche in Etagen angeordnete Trag- und Laufführungen (3) für auf diesen abzustellende Paletten (4) und in diesen verfahrbare Satellitenwagen (5) aufweisen, dadurch gekennzeichnet,
- daß die Trag- und Laufführungen (3) jeweils als Rinne (3) mit mindestens zwei Trag- und Zentrierauflagern (24, 26/23) für die Paletten (4) und mindestens einem Kanal (3a) für die Laufführung des Satellitenwagens (5) ausgebildet ist,
- daß den Rinnen (3) der Regalzeilen (RZ) in jeder Etage an ihrem der Regalgasse (1) abgewandten Längenende ein Luftkanal (6) zugeordnet ist, welcher mit den Rinnen (3) eine Luft-Umwälzführung (LUF) bildet, wobei aus dem Luftkanal (6) in jede Rinne (3) Zuluft eingeblasen wird, die die Palette (4) und das darauf stehende Gut (G) durchströmt und anschließend als Abluft zum Schiffsrumpf (SR) abgesaugt wird,
und
- daß jeder Regalzeile (RZ) an ihrer der Regalgasse (1) zugewandten Be- und Entlade-Stirnseite eine die Regalzeile (RZ) auf ihrer gesamten Höhe verschließende und zum Be- und Entladen zu öffnende Luftsperre (7) angeordnet ist.

2. Regallager nach Anspruch 1, dadurch gekennzeichnet, daß jede Rinne (3)
mindestens zwei seitliche, aufrechte Führungsschenkel (21, 22) für den Satellitenwagen (5),
mindestens zwei seitliche, waagerechte Tragstege (23, 24) für die Paletten (4),
zwei sich an die Tragstege (24) nach oben und außen berichtet anschließende, mit Abstand (S) zur Palette (4) stehende Zentrierleisten (25),
und
zwei sich an die Zentrierleisten (25) anschließende, nach oben gerichtete, mit Abstand (S) zur Palette (4) stehende Schutzränder (26)
aufweist,
wobei die Rinne (3) mit ihrem Kanal (3a) und der Palette (4) eine Luftführung bildet und zwischen ihren Schutzrändern (26) und der aufgenommenen Palette (4) einen freien Raum (27) für Zurrmittel für die Palette (4) mit aufgenommenem Gut (G) ergibt.

3. Regallager nach Anspruch 1 oder 2, dadurch gekennzeichnet, daß die Rinne (3) aus zwei im Querschnitt identischen, spiegelbildlich angeordneten Kanälen (3a) mit U-förmigem Querschnitt zusammengesetzt ist und
- jeder Kanal (3a) einen ersten, vom Kanalboden (28) abgewinkelten, aufrechten Führungsschenkel (21) mit obenendig zur Kanalmitte hin abgewinkelten, waagerechten ersten Tragsteg (23) aufweist und diese beiden ersten Führungsschenkel (21) aneinanderliegen und die beiden Kanäle (3a) zu der Rinne (3) verbinden,
- einen zweiten vom Kanalboden (28) abgewinkelten, aufrechten Führungsschenkel (22) als äußeren Rinnenschenkel besitzt,
- am oberen Ende des zweiten Führungsschenkels (22) ein zweiter Tragsteg (24) nach außen abgewinkelt ist,
- eine an den zweiten Tragsteg (24) schräg nach oben und außen abgewinkelte Zentrierleiste (25) hat,
- und an die Zentrierleiste 825) der aufrechte Schutzrand (26) mit obenendig angeformtem, nach außen gerichteten Kantenprofil oder -steg (29) angeformt ist.

4. Regallager nach einem der Ansprüche 1 bis 3, dadurch gekennzeichnet, daß die Zentrierleiste (25) unter einem Winkel von 45° zum zweiten Tragsteg (24) steht.

5. Regallager nach einem der Ansprüche 1 bis 4, dadurch gekennzeichnet, daß der zentrierleistenseitige zweite Tragsteg (24) eine größere Breite als der erste kanalverbindungsseitige Tragsteg (23) hat.

6. Regallager nach einem der Ansprüche 1 bis 5, dadurch gekennzeichnet, daß die beiden Tragstege (23) für die mittige Abstützung der Palette (4) zu nach oben und außen gerichteten Zahnkanten (23a) ausgebildet sind.

7. Regallager nach einem der Ansprüche 1 bis 6, dadurch gekennzeichnet, daß die Luftkanäle (6) einer Schiffsrumpf-Isolierung (10) benachbart von den in Beladerichtung (A) hinteren Enden der Rinne (3) getragen und an Regalstützen (8) befestigt sind.

8. Regallager nach einem der Ansprüche 1 bis 7, dadurch gekennzeichnet, daß die Luftsperre (7) von einer flexiblen Plane (32) und einem motorisch angetriebenen, endlos umlaufenden, die Plane (32) in Höhenrichtung und auf der Oberseite der Regalzeile (RZ) von unten nach oben und umgekehrt bewegenden Förderer (33) gebildet ist.

9. Regallager nach einem der Ansprüche 1 bis 8, dadurch gekennzeichnet, daß der Förderer (33) der Luftsperren-Plane (32) in der Regalgasse (1) zugewandten vertikalen Regalstützen (8) und oberen horizontalen Trägern (9) über Umlenkorgane (34) endlos umlaufende Ketten (33), Riemen oder Seile mit dazwischen lösbar festgelegten Querstäben (38) aufweist, an denen mittels Schlaufen (39) die zu den eingelagerten Paletten (4) mit Gütern (G) in sich ebene (glatte) Plane (32) lagefixiert festgelegt ist.

10. Regallager nach einem der Ansprüche 1 bis 9, dadurch gekennzeichnet, daß die Querstäbe (38) mit beidendseitigen, federbelasteten Rastzapfen (40) losbar in Haltelaschen oder Kettenglieder (33a) der Ketten (33), Riemen oder Seile festgelegt sind.

11. Regallager nach einem der Ansprüche 1 bis 10, dadurch gekennzeichnet, daß im unteren und oberen Endbereich der vertikalen Regalstützen (8) Umlenkräder oder -rollen (34) drehbar gelagert sind, dabei die unteren Umlenkräder oder -rollen (34) unter Federspannung (41) stehen und in dem dem Schiffsrumpf (SR) benachbarten Längenende der oberen, horizontalen Träger (9) zwischen den Planenbahnen (32) ein Antriebsmotor (42) angeordnet ist.

12. Regallager nach einem der Ansprüche 1 bis 11, dadurch gekennzeichnet, daß die Plane (32) aus einer Textilbahn, kunststoffbeschichteten Tuchbahn, einer Kunststoffolie o. dgl. gebildet ist und eine Länge hat, die mindestens der Höhe der Regalzeile (RZ) entspricht.

13. Regallager nach einem der Ansprüche 1 bis 12, dadurch gekennzeichnet, daß an den Innenseiten der die Regalzeilenbreite begrenzenden Regalstützen (8) über die gesamte Regalzeilenhöhe und -tiefe verlaufende Sickenbleche (43) als Prall- und Luftsperrwände angeordnet sind, deren Sicken (43a) in horizontaler Tiefenrichtung der Regalzeile (RZ) verlaufen, in deren Sickentälern (43b) Befestigungsmittel (44) zum Halten der Sickenbleche (439 an den Regalstützen (8) zurückversetzt liegen und deren Sicken (43a) Führungen für die ein- und auszuladenden Paletten (4) mit Gütern (G) bilden.

14. Regallager nach einem der Ansprüche 1 bis 13, dadurch gekennzeichnet, daß die Sickenbleche (43) für beide Regalzeilenseiten jeweils einstückig ausgebildet und untenendig mit einem vom Schutzrand (26) nach außen abgewinkelten Kantensteg (29) verbunden sind.

15. Regallager nach einem der Ansprüche 1 bis 14, dadurch gekennzeichnet, daß die Sickenbleche (43) jeder Regalzeile (RZ) an ihrem regalgassenseitigen Ende mit einer abgeschrägten und/oder bogenförmigen Einlaufkufe (45) für die Paletten (4) mit Gütern (G) ausgestattet sind.

16. Regallager nach einem der Ansprüche 1 bis 15, dadurch gekennzeichnet, daß die vertikalen Regalstützen (8) auf horizontalen, über in einer Isolierung (10) des Schiffsrumpfes (SR) angeordnete Befestigungsböcke (12) mit dem Schiffsrumpf (SR) verbundene Lastträger (13) befestigt sind
und
einzelne Horizontalträger (9) mit ihrem luftkanalseitigen Längenende mit horizontalen Seitenträgern (14) über an der Isolierung (10) des Schiffsrumpfes (SR) angeordnete Stützböcke (15) gegenüber dem Schiffsrumpf (SR) horizontal abgestützt sind.

17. Regallager nach einem der Ansprüche 1 bis 16, dadurch gekennzeichnet, daß jeweils die beiden sich beiderseits der Regalgasse (1) gegenüberstehende Regalzeilen (RZ) durch eine die Regalgasse (1) überspannende und verbindungslos unter dem Schiffsdeck (SD) liegende Brücke (11) miteinander verbunden und gegeneinander stabilisiert sind.

18. Regallager nach einem der Ansprüche 1 bis 17, dadurch gekennzeichnet, daß das Regalfahrzeug (2) untenseitig in einem gegenüber der Standebene der Regalzeilen (RZ) im Schiffsrumpf (SR) abgesenkten Gang (1a) der Regalgasse (1) und obenendig unter den Brücken (11) mittels formschlüssiger Führungsmittel (16, 17) verfahrbar ist, wobei als formschlüssige Führungsmittel (16, 17) unter den Brücken (11) und im Gang (1a) je eine Zahnstange (16) festgelegt und am Regalfahrzeug (2) oben- und untenseitig Zahnräder (17) angebracht sind, welche mit den Zahnstangen (16) kämmen.

19. Regallager nach einem der Ansprüche 1 bis 18, gekennzeichnet durch eine Be- und Entladeschleuse (46), welche eine im Schiffsdeck (SD) aufschwenkbar gelagert, einen Durchlaß (47) im Schiffsdeck (SD) abgedichtet verschließende Klappe (48) mit eckiger, vorzugsweise rechteckiger Grundform und eine Hubvorrichtung (49) zum Ein- und Ausbringen der Paletten (4) mit Gütern (G) in das bzw. aus dem Regallager aufweist.

20. Regallager nach einem der Ansprüche 1 bis 19, dadurch gekennzeichnet, daß die Hubvorrichtung (49) eine unter dem Schiffsdeck (SD) festgelegte und mit dem Schiffsrumpf (SR) über ein Loslager (50) beweglich verbundene Höhenführung (51) und einen an der Höhenführung (51) motorisch verfahrbaren, einen durch den Durchlaß (47) im Schiffsdeck (SD) höhenverfahrbaren Kragarm (52) tragenden Vertikalschlitten (53) aufweist.

21. Regallager nach einem der Ansprüche 1 bis 20, gekennzeichnet durch einen von allen vier Seiten mit Paletten (4) be- und entladbaren Transportkorb (54) mit rechteckiger Grundform und Zentriervorsprüngen (55) und Einlaufkufen (56) für die Paletten (4) und eine den Transportkorb 854) zwischen aufrechten Führungen (57) und mit seinem untenseitigen Rahmen (58) in Einsetzmulden (59) aufnehmende Rollenbahn (60), deren Rollen (60a) die Paletten 84) vom Rahmen (58) hochheben und aus dem Transportkorb (54) ausfördern.

## Claims

1. A pallet shelf storage system for/in a refrigeration ship, disposed on both sides of an aisle (1) and in the aisle (1) a shelving vehicle (2) is movable arranged carrying a lifting corss arm (20) the shelf having a plurality of shelf rows (RZ) at different shelf level sections of which guiding and supporting means (3) are arranged which primarily are running guides (3) guiding cars (5) and for carrying pallets (4), characterized in that
- which guiding and supporting means (3) are forming a channel (3a) being equipped with at least two supports (24, 26/23) for supporting the pallets (4) and are forming a channel (3a) being the running guide of the cars (5)
- the channel-like running guides (3) each of which is connected to one of fresh air ducts (6) which are located opposite to the aisle (1) at each shelf level, thereby the fresh air ducts (6) and the running guides (3) are part of an air circulation guide (LUF) by which fresh air is fed from the air duct (6) via the running guides (3) and pallets (4) passing goods (G) stored thereon and back via the ship hull (SR) wherefrom the air is removed and
- along the sides of the aisle (1) airlocks (7) are provided at each shelf row (RZ) closing it over ist intire hight and being opened when being loaded to or deloaded.

2. The shelf system of claim 1, characterized in that each measuring and supporting means (3) has
at least two lateral, upright guide legs (21, 22) for guiding the car (5), and has
at least two lateral extending support flanges (23, 24) for supporting the pallets (4),
two centering strips (25) are adjoining the support flanges (24) being directed upward and outward and spaced apart by a given distance (S) from the pallet (4),
two guard rims (26) are adjoining the centering strips (25) and pointing upward and spaced apart by the second distance (S) from the pallet (4),
whereby each of the channels (3a) of the running guides (3) together with the pallets (4) set down on them, form the air guide, and, between the guard rims (26) and the resting pallets (4) a free space (27) is provided for applying lashing means for the pallets (4).

3. The shelf system of claims 1 or 2, characterized in that the guiding and supporting means (3) are composed of two channels (3a) of U-shaped identical cross section, arranged in mirror symmetry, and
- each channel (3a) has a first upright guide leg (21), bent at an angle from a channel bottom (28), the guide leg (21) carrying a horizontal first support flange (23) bent with an angle from the top of the guide leg (21) toward the center of the channel (3a), and the two first guide legs (21) contact one another and connect the two channels (3a),
- each channel (3a) has a second upright guide leg (22), bent at an angle from the channel bottom (28), as an outer leg of the channel,
- on the upper end of the second guide leg (22), a second support flange (24) is bent outward at an angle,
- from the second support flange (24) a centering strip (25) is bent obliquely upward and outward at an angle,
- and the upright guard rim (26) is formed onto the centering strip (25) with an outward-oriented edge profile or flange (29) formed onto it at the upper end.

4. The shelf system of one of the claims 1 to 3, characterized in that the centering strip (25) is at an angle of 45° from the second support flange (24).

5. The self system of one of the claims 1 to 4, characterized in that the second support flange (24) directed toward the centering strip (25) has a greater width than the first support flange (23) directed toward the connecting channels.

6. The self system of one of the claims 1 to 5, characterized in that the two support flanges (23), for central bracing of the pallet (4), are formed into upward- and outward-pointing toothed edges (23a).

7. The self system of one of the claims 1 to 6, characterized in that the air ducts (6), adjacent to a ship hull insulation (10), are carried by the rear ends of the guide and supporting means (3) in terms of a loading direction (A), and are secured on shelf supports (8).

8. The self system of one of the claims 1 to 7, characterized in that the air lock (7) is formed by a flexible tarp (32) and a motor-driven, endlessly revolving convayor (33) that moves the tarp (32) vertically and on the top of the shelf rows (RZ) from bottom to top and vice versa.

9. The self system of one of the claims 1 to 8, characterized in that the conveyor (33) of the airlocking tarp (32) has chains (33), belts or cables, endlessly revolving via deflection devices (34) in vertical shelf supports (8) toward the aisle (1) and upper horizontal bearers (9), with cross bars (38) detachably fixed between the chains (33), belts or cables, on which cross bars (38) by means of loops (39) the tarp (32), which is intrinsically flat (smooth) with respect to the pallets (4) carrying goods (G) stored in the shelves, is mounted in a positionally fixed manner.

10. The self system of one of the claims 1 to 9, characterized in that the cross bars (38) are releasably fixed, by spring-loaded detent protrusions (40) on both ends, in retaining straps or chain links (33a) of the chains (33), or belts or cables.

11. The self system of one of the claims 1 to 10, characterized in that the deflection devices (34) are wheels or rollers (34) which are rotatably supported in the lower and upper end region of the vertical shelf supports (8), and the lower deflection wheels or rollers (34) are under spring tension (41), and a drive motor (42) of the tarp (32) is disposed adjacent to the ship hull (SR) in the lengthwise end of the upper, horizontal bearers (9).

12. The self system of one of the claims 1 to 11, characterized in that the tarp (32) is formed of a section of woven fabric, a section of plastic-coated cloth, plastic film, or the like, and has a length that is at least equal to the height of the shelf rows (RZ).

13. The self system of one of the claims 1 to 12, characterized in that beaded plates (43) are extending over the entire height and depth of the shelf rows (RZ) and are disposed as impact and airlock walls on the insides of the shelf supports (8) that define the width of the shelf rows (RZ); the beads (43a) of these plates extend in the horizontal direction of the shelf rows (RZ), and fastening means (44) for retaining the beaded plates (43) on the shelf supports (8) are located in recessed fashion in the troughs (43b) between the beads (43a), while the raised beads (43a) form guides for the pallets (4) and goods (G) that are to be inserted and removed.

14. The shelf system of one of the claims 1 - 13, characterized in that the beads (43) for both sides of the shelf rows (RZ) are each embodied in one piece and on the lower end are jointed to an edge profile or an edge flange (29) bent outward from the guard rim (26).

15. The self system of one of the claims 1 to 14, characterized in that the beaded plates (43) of each shelf row (RZ) are equipped, on their end toward the aisle (1), with a beveled and/or curved inlet slide (45) for the pallets (4) carrying goods (G).

16. The self system of one of the claims 1 to 15, characterized in that vertical shelf supports (8) are secured to horizontal fastening blocks (12), disposed in an insulation (10) of the ship hull (SR), by load bearers (13) that are connected to the ship hull (SR),
and
individual horizontal bearers (9) are horizontally braced against the hull (SR) with horizontal lateral bearers (14), via support blocks (15) disposed on an insulation (10) of the hull (SR).

17. The self system of one of the claims 1 to 16, characterized in that each two shelf rows (RZ) facing one another on either side of the aisle (1) are joined together and stabilized against one another by means of a bridge (11) that spans the aisle (1) and is located in connectionless fashion under a deck (SD) of the ship.

18. The self system of one of the claims 1 to 17, characterized in that the shelving vehicle (2) travels on its bottom in a gangway (1a) of the aisle (1) that is lowered in the hull (SR) relative to the level on which the shelf rows (RZ) stand and the shelving vehicle (2) on its top end is movable below the bridges (11) by means of positive guide menas (16, 17), wherein as positive guide means (16, 17) one toothed rack (16) is fixed below the bridges (11) and one toothed rack (16) is fixed in the gangway (1a), and further the positive guide means (17) are top and bottom gear wheels (17), mounted on the shelving vehicle (2), which mesh with the toothed racks (16).

19. The self system of one of the claims 1 to 18, characterized by a loading and unloading hatch (46), which has a flap (48) pivotably supported in a ship deck (SD) and closing off an opening (47) in the deck (SD) in sealed fashion, the flap being of polygonal and preferably rectangular shape, and has a hoisting device (49) for inserting the paletts (4) carrying goods (G) into and removing them from the shelf system.

20. The self system of one of the claims 1 to 19, characterized in that the lifting device (49) has a vertical guide (51), which is fixed to the underneath of the ship deck (SD) and is movably joined to the hull (SR) via a movable bearing (50), and which has a vertical carriage (53) that is movable by a motor along the vertical guide (51) and carries a cantilevered arm (52) that is vertically movable through the opening (47) in the deck (SD).

21. The self system of one of the claims 1 to 20, characterized by a transport basket (54) that can be loaded with pallets (4) and unloaded of these pallets (4) from all four sides, the basket having a rectangular shape and having centering protrusions (55) and inlet slides (56) for the pallets (4), and a roller track (60), which receives the transport basket (54) both between upright guides (57) and by its lower frame (58) in insertion depressions (59); rollers (60a) fo this roller track (60) lift the pallets (4) from the frame (58) and move it out of the transport basket (54).

## Revendications

1. Dispositif de stockage en compartiments étagés pour un navire frigorifique, lequel comprend un transporteur (2) circulant dans une voie (1) desservant les rayonnages et équipé d'une traverse élévatrice, de nombreuses travées de rayonnages (RZ) disposées des deux côtés de la voie de circulation et de desserte (1) et présentant des glissières d'appui et de roulement (3) étagées, destinées à recevoir les palettes (4), et un transporteur auxiliaire (5) circulant dans ces glissières,
caractérisé en ce que
- les glissières d'appui et de roulement (3) sont conçues chacune sous forme de gorge (3) avec au moins deux barres d'appui et de centrage (24, 26/23) pour les palettes (4) et au moins un canal (3a) pour la circulation guidée du transporteur auxiliaire (5),
- un canal d'air (6) est coordonné, à chaque étage, aux gorges (3) des travées de rayonnages (RZ), à leur extrémité longitudinale, opposée à la voie de circulation et de desserte (1), ce canal d'air assurant, en relation avec les gorges (3) une circulation guidée de l'air (LUF), l'air amené étant insufflé, par le canal d'air, dans chaque gorge (3) et circule à travers les palettes (4) et les marchandises (G) dont elles sont chargées, puis est aspiré en direction de la carcasse du navire (SR).
et
- un dispositif obturateur (7) empêchant un échange d'air est coordonné à chaque travée de rayonnages (RZ), sur le côté frontal de chargement et déchargement dirigé vers la voie de circulation et de desserte (1), lequel dispositif obturateur fermant la travée sur toute sa hauteur et l'ouvrant lors du chargement et du déchargement.

2. Dispositif de stockage selon la revendication 1,
caractérisé en ce que
chaque gorge (3) comprend
au moins deux branches de guidage latéral verticales (21, 22) pour le transporteur auxiliaire (5),
au moins deux barres d'appui horizontales, latérales (23, 24) pour les palettes (4),
deux barres de centrage (25) prolongeant en pente ascendante, dirigée vers l'extérieur, les barres d'appui (24), à distance (S) de la palette (4)
et
deux bords de protection (26) dirigés vers le haut, faisant suite aux barres de centrage (25) et distancés d'un écart (S) de la palette (4),
la gorge de roulement (3) guidant l'air et formant, entre ses bords de protection (26) et la palette (4) prise en charge, un espace libre (27) accueillant des auxilaires d'amarrage pour la palette (4) chargée de marchandises (G).

3. Dispositif de stockage selon l'une des revendications 1 ou 2,
caractérisé en ce que
la gorge (3) est composée de deux canaux de section transversale en U identique, disposés inversement et que
- chaque canal (3a) présente une première branche de guidage verticale (21), coudée à partir du fond (28) du canal et prolongée, vers le haut, par une barre d'appui (23) horizontale, coudée vers le centre du canal, ces deux premières branches de guidage (21) se côtoyant et reliant les deux canaux (3a) pour former la gorge (3),
- une deuxième branche de guidage verticale (22), coudée à partir du fond (28) du canal, forme une branche de guidage extérieure,
- une deuxième barre d'appui (24), coudée vers l'extérieur, est formée à l'extrémité supérieure de la deuxième branche de guidage (22),
- une barre de centrage (25), en pente ascendante et coudée vers l'extérieur, fait suite à la deuxième barre d'appui (24),
- un bord de protection (26) vertical est formé à partir de la barre de centrage (25) et terminé en haut par un profilé ou une barre marginale (29).

4. Dispositif de stockage selon l'une des revendications 1 à 3,
caractérisé en ce que
la barre de centrage (25) forme un angle de 45° par rapport à la deuxième barre d'appui (24).

5. Dispositif de stockage selon l'une des revendications 1 à 4,
caractérisé en ce que
la deuxième barre d'appui (24), situé du côté de la barre de centrage, est plus large que la première barre d'appui (23) située du côté de jonction des canaux.

6. Dispositif de stockage selon l'une des revendications 1 à 5,
caractérisé en ce que
les deux barres d'appui (23), soutenant centralement la palette (4), sont conçues sous forme de bords dentés (23a) s'élevant vers l'extérieur.

7. Dispositif de stockage selon l'une des revendications 1 à 6,
caractérisé en ce que
les canaux d'air (6) avoisinant une isolation de la carcasse du navire, sont portés par les extrémités postérieures de la gorge (3) et fixés aux montants (8) des rayonnages.

8. Dispositif de stockage selon l'une des revendications 1 à 7,
caractérisé en ce que
le dispositif obturateur d'air (7) est composé d'une bâche flexible (32) et d'un dispositif convoyeur (33) se mouvant en continu, entraîné par un moteur et déplaçant la bâche (32) de bas en haut et inversement, dans le sens vertical et sur le côté supérieur des travées de rayonnages (RZ).

9. Dispositif de stockage selon l'une des revendications 1 à 8,
caractérisé en ce que
le dispositif convoyeur (33) de la bâche (32) présente des chaînes, courroies ou câbles, qui se déplacent sans fin sur des organes de renvoi (34), dans les montants verticaux (8) dirigés vers la voie de circulation et de desserte (1) et dans les poutres horizontales, supérieures (9), et des barres transversales (38), amovibles, intercalées, auxquelles la bâche, plane (lisse) du côté des palettes (4) chargées de marchandises (G), est fixée et maintenue en position voulue à l'aide de boucles (39).

10. Dispositif de stockage selon l'une des revendications 1 à 9,
caractérisé en ce que
les barres transversales (38) sont maintenues de façon amovible dans des colliers de fixation (39) ou les maillons (33a) des chaînes (33), courroies ou câbles a l'aide d'organes d'arrêt (40) chargés bilatéralement par ressort.

11. Dispositif de stockage selon l'une des revendications 1 à 10,
caractérisé en ce que
des poulies ou des galets de renvoi (34) sont montés, rotatifs, à l'extrémité inférieure et à l'extrémité supérieure des montants verticaux (8) des rayonnages, les poulies ou galets de renvoi inférieurs (34) étant soumis à la tension de ressorts (41) et qu'un moteur de commande (42) est installé dans l'extrémité longitudinale de la poutre supérieure (9) avoisinant la carcasse du navire (SR).

12. Dispositif de stockage selon l'une des revendications 1 à 11,
caractérisé en ce que
La bâche (32) consiste en une bande textile, une bande de drap plastifiée, une feuille de matière plastique ou autre matière analogue, et a une longueur correspondant au moins à la hauteur d'une travée de rayonnage (RZ).

13. Dispositif de stockage selon l'une des revendications 1 à 12,
caractérisé en ce que
des tôles nervurées (43), s'étendant sur toute la hateur et toute la profondeur d'une travée de régale et formant des chicanes et des surfaces d'obturation empêchant l'échappement de l'air, sont disposées sur les côtés intérieurs des montants (8) qui limitent en largeur les travées de rayonnages, les nervures (43a) s'étendant horizontalement, dans la sens de la profondeur de la travée de rayonnages (RZ) et ces tôles nervurées (43) étant fixées en retrait sur les montants (8) à l'aide de dispositifs de fixation (44) placés dans leurs creux (43b), les saillies (43a) formant des guidages pour le chargement et le déchargement des palettes (4) remplies de marchandises (G).

14. Dispositif de stockage selon l'une des revendications 1 à 13,
caractérisé en ce que
les tôles nervurées (43) des deux côtés des travées de rayons sont exécutées chacune d'une seule pièce et reliées à leur extrémité inférieure à une aile (29) coudée vers l'extérieur en prolongement du bord de protection (26).

15. Dispositif de stockage selon l'une des revendications 1 à 14,
caractérisé en ce que
l'extrémité des tôles nervurées (43) de chaque travée de rayonnages (RZ) dirigée vers la voie de circulation et de desserte est pourvue d'une pièce d'introduction (45) en biais et/ou en forme d'arc, à l'intention des palettes (4) chargées de marchandises (G).

16. Dispositif de stockage selon l'une des revendications 1 à 15,
caractérisé en ce que
les montants verticaux (8) sont fixés sur des porte-charge (13) reliés à la carcasse du navire (SR) par l'intermédiaire de pièce de fixation (12) disposés dans une isolation (10) de la carcasse du navire (SR)
et que
les extrémités longitudinales, côté canal d'air, de quelques-unes des poutres horizontales (9) sont soutenues horizontalement, par rapport à la carcasse du navire (SR), par des supports latéraux, horizontaux (14), par l'intermédiaire de pièces de fixation (15) installées sur une isolation (10) de la carcasse du navire (SR).

17. Dispositif de stockage selon l'une des revendications 1 à 16,
caractérisé en ce que
les deux travées de rayonnages (RZ) se faisant face de part et d'autre de la voie de circulation et de desserte (1) sont reliées ensemble et stabilisées par rapport l'une à l'autre par un pont (11) jeté au-dessus de la voie de circulation et de desserte (1), sous le pont du navire (SD), sans raccordement à celui-ci.

18. Dispositif de stockage selon l'une des revendications 1 à 17,
caractérisé en ce que
le transporteur (2) roule, avec sa partie inférieure, dans une voie de roulement (1a) de la voie de circulation et de desserte (1), laquelle voie de roulement (1a) est pratiquée en profondeur dans la carcasse du navire (SR) et est donc inférieur au plan de niveau des'travées de rayonnages (RZ), le transporteur (2) étant guidé, dans la voie de roulement (1a) et sous le pont (11), par des organes de guidage à engagement géométrique (16, 17) et des crémaillères (16), fixées l'une sous les ponts (11) et l'autre dans la voie de roulement (1a), coopérant respectivement avec des roues dentées (17) qui équipent respectivement la partie supérieure et la partie inférieure du transporteur (2).

19. Dispositif de stockage selon l'une des revendications 1 à 18,
caractérisé en ce que
un système de chargement et de déchargement (46) comprenant un volet (48) de préférence rectangulaire, monté, rabattable, dans le pont du navire (SD) et fermant hermétiquement un passage (47) pratiqué dans le pont du navire (SD) et un mécanisme élévateur (49) pour amener les palettes (4) chargées de marchandises (G) au dispositif de stockage en compartiments étagés ou les en retirer.

20. Dispositif de stockage selon l'une des revendications 1 à 19,
caractérisé en ce que
le mécanisme élévateur (49) comprend un guidage vertical (51) fixé sous le pont du navire (SD) et relié mobilement à la carcasse du navire (SR) par l'intermédiaire d'un palier libre (50) et un chariot vertical (53) qui, avec un bras en porte-à-faux (52) se mouvant verticalement dans le passage (47) pratiqué dans le pont du navire (SD), est entraîné par un moteur et se déplace, dans le long du guidage vertical (51).

21. Dispositif de stockage selon l'une des revendications 1 à 20,
caractérisé par
une cage de transport (54) de forme de base rectangulaire, pouvant être chargée et déchargée des quatre côtés avec des palettes (4) et pourvue de saillies de centrage (55) et de pièces d'introduction (56) pour les palettes (4) ainsi que par un transrouleur (60) prenant en charge la cage de transport (54), entre des guidages verticaux (57), par son cadre inférieur (58) s'engageant dans des cavités de réception (59), les rouleaux (60a) de ce transrouleur (60) soulevant les palettes (4) au-dessus du cadre (58) pour les retirer de la cage de transport (54).
